(19) **Europäisches Patentamt / European Patent Office / Office européen des brevets**

(11) **EP 1 609 163 B1**

(12) **FASCICULE DE BREVET EUROPEEN**

(45) Date de publication et mention de la délivrance du brevet: **25.03.2009 Bulletin 2009/13**

(21) Numéro de dépôt: **04742825.5**

(22) Date de dépôt: **01.04.2004**

(51) Int Cl.: **H01H 9/56** (2006.01)

(86) Numéro de dépôt international: **PCT/FR2004/050137**

(87) Numéro de publication internationale: **WO 2004/090922 (21.10.2004 Gazette 2004/43)**

(54) **PROCEDE DE DETERMINATION DE L INSTANT DE FERMETURE D UN DISJONCTEUR SUR UNE LIGNE HAUTE TENSION**

VERFAHREN ZUR BESTIMMUNG DES SCHLIESSMOMENTS EINES UNTERBRECHERSCHALTERS AUF EINER HOCHSPANNUNGSLEITUNG

METHOD FOR DETERMINING THE MOMENT OF CLOSURE OF A CIRCUIT BREAKER ON A HIGH VOLTAGE LINE

(84) Etats contractants désignés:
**AT BE BG CH CY CZ DE DK EE ES FI FR GB GR HU IE IT LI LU MC NL PL PT RO SE SI SK TR**

(30) Priorité: **02.04.2003 FR 0350086**

(43) Date de publication de la demande:
**28.12.2005 Bulletin 2005/52**

(73) Titulaire: **AREVA T&D SA**
**92084 Paris La Defense Cedex (FR)**

(72) Inventeurs:
• **DUPRAZ, Jean-Pierre**
**F-01360 BRESSOLES (FR)**

• **SIGUERDIDJANE, Houria**
**F-91440 BURES-SUR-YVETTE (FR)**
• **BOUDAOUD, Farah**
**F-94000 CRETEIL (FR)**
• **BASTARD, Patrick**
**F-91190 GIF-SUR-YVETTE (FR)**

(74) Mandataire: **Poulin, Gérard et al**
**Brevalex**
**3, rue du Docteur Lancereaux**
**75008 Paris (FR)**

(56) Documents cités:
**US-A- 5 654 625**          **US-B1- 6 392 390**

**Description**

La présente invention concerne un procédé de détermination de l'instant de fermeture d'un disjoncteur sur un réseau électrique comportant une ligne de transport triphasée et une source haute tension. Le procédé selon l'invention est plus particulièrement adapté aux lignes très haute tension, c'est à dire avec une tension nominale de source égale à plusieurs centaines de kV.

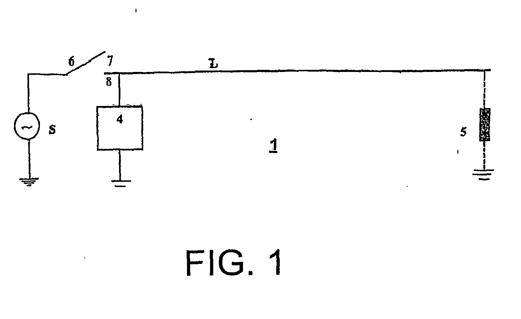

Un tel réseau électrique peut être modélisé en première approximation par le schéma équivalent représenté en figure 1. Le réseau 1 comporte :

- une source S de tension,
- une ligne de transport triphasée L,
- un disjoncteur 6,
- une réactance shunt 5 de compensation,
- un transformateur 4 capacitif de tension.

La tension de la source S est une très haute tension ayant par exemple une valeur nominale de 500 kV et une fréquence de réseau de 50 Hz.

La ligne de transport triphasée L est par exemple une ligne de longueur 400 km permettant de transporter trois phases A, B et C.

On entend par disjoncteur aussi bien un disjoncteur commandé par trois commandes unipolaires indépendantes associées chacune à une phase qu'un disjoncteur commandé par une commande unique tripolaire. De façon générale, le disjoncteur triphasé 6 comporte au moins trois chambres de coupure associées chacune à une des phases A, B ou C. En cas de tension nominale élevée, plusieurs chambres de coupure peuvent être connectées en série. Le disjoncteur 6 comporte donc au moins trois couples de contacts, chaque couple étant associé à une des trois phases de la ligne L et permettant d'interrompre tout courant circulant entre la source S et la ligne L par séparation des deux contacts en cas de défaut sur la phase associée, le premier contact étant du côté de la source et le deuxième contact étant du côté de la ligne. Seuls deux contacts 7 et 8 associés à une phase du disjoncteur 6 sont représentés en figure 1.

La réactance shunt 5 de compensation est par exemple une bobine d'inductance permettant de compenser la puissance réactive capacitive des longues lignes de transport d'énergie électrique à haute tension.

Le transformateur 4 capacitif de tension situé en début de ligne permet de mesurer la tension du côté ligne du disjoncteur.

Un changement brusque de configuration du réseau de transport d'énergie engendré par le fonctionnement d'un disjoncteur provoque une surtension transitoire rapide, dite surtension de manoeuvre, qui se propage sur le réseau. Ces surtensions de manoeuvre peuvent apparaître à l'ouverture ou à la fermeture des disjoncteurs. Etant donné que l'utilisation des disjoncteurs sans réamorçage s'est généralisé (c'est à dire avec réenclenchement automatique du disjoncteur après ouverture), c'est à la fermeture et surtout à la refermeture d'une ligne ayant conservé une charge piégée qu'apparaissent les plus fortes surtensions.

Une première solution à ce problème consiste à utiliser un système auxiliaire comportant une résistance dite de fermeture en série avec une paire de contacts auxiliaires, ledit système auxiliaire étant monté en parallèle avec la chambre de coupure. Les contacts auxiliaires sont actionnés quelques instants avant l'entrée en contact des contacts principaux de façon à insérer dans le circuit la résistance de fermeture. L'enclenchement en deux temps permet de réduire très efficacement les surtensions de fermeture.

Cette première solution, quoique très efficace, présente l'inconvénient d'être très coûteuse.

Une seconde solution consiste à contrôler les instants de fermeture des disjoncteurs en utilisant des dispositifs électroniques de synchronisation remplaçant les résistances de fermeture. De tels dispositifs permettent la manoeuvre synchronisée d'une ligne de transport haute tension.

Ainsi, lorsqu'il se produit un défaut monophasé (qui représente plus de 90% des défauts de lignes) sur une ligne haute tension il se peut, dans certains réseaux, que l'élimination du défaut passe par l'ouverture tripolaire du disjoncteur suivie d'une refermeture presque immédiate (entre 300 ms et 1s) pour essayer d'assurer la continuité de service. Dans ce cas, deux des phases sont donc manoeuvrées à vide par un des disjoncteurs d'extrémité de ligne. Lors de la refermeture, il est nécessaire de fermer les contacts du disjoncteur au bon moment (c'est à dire sensiblement au moment où la tension aux bornes des contacts du disjoncteur est nulle) sur ces deux phases à vide, pour limiter les surtensions à une valeur adéquate. Ce moment varie selon la configuration du réseau et doit être déterminé par un algorithme de fermeture en fonction des signaux de tension mesurés sur le réseau et qui lui sont fournis. Le choix du bon moment de la refermeture est fait à partir de l'analyse de la tension aux bornes des contacts du disjoncteur de chaque phase saine.

Toutefois, la mise en oeuvre de cette seconde solution pose également certaines difficultés.

Ainsi, les lignes compensées par réactance shunt ont la particularité, après une ouverture, d'osciller à une fréquence de l'ordre de 50 à 90% de la fréquence du réseau. Cette fréquence d'oscillation est principalement liée à la capacité de la ligne et à sa réactance de compensation shunt. La tension qui apparaît aux bornes du disjoncteur présente donc des battements plus ou moins prononcés selon le degré de compensation qui varie en fonction de la puissance qui transite. Lors d'une synchronisation à la refermeture, il faut donc viser un zéro de ce battement pour limiter les surtensions. La détermination du zéro de ce battement n'est pas facile dans la mesure où, en pratique, la phase en défaut influe sur le signal des deux phases saines de sorte que le signal obtenu que l'on doit analyser aux bornes des contacts du disjoncteur des deux phases saines est de forme très complexe et difficile à analyser. En conséquence, les résultats peuvent ne pas atteindre la précision de synchronisation souhaitée. L'obtention d'un résultat satisfaisant, c'est à dire avec un degré de confiance déterminé, impose un temps de convergence relativement long de l'algorithme de fermeture utilisé.

Il est également connu du brevet US-B-6 392 390 un procédé de détermination de l'instant de fermeture d'un disjoncteur sur un réseau électrique.

La présente invention vise à fournir un procédé de détermination de l'instant de fermeture d'un disjoncteur sur un réseau électrique permettant d'améliorer la qualité des signaux à analyser et de diminuer ainsi le temps de convergence de l'algorithme utilisé pour la détermination de l'instant de fermeture des contacts du disjoncteur après ouverture tripolaire due à la présence d'un défaut monophasé.

La présente invention propose à cet effet un procédé de détermination de l'instant de fermeture d'un disjoncteur sur un réseau électrique, ledit réseau comportant :

- une source haute tension,
- une ligne de transport triphasée,
- un disjoncteur comportant au moins trois couples de contacts, chaque couple étant associé à une des trois phases de ladite ligne et permettant d'interrompre tout courant circulant entre ladite source et ladite ligne par séparation desdits deux contacts en cas de défaut sur la phase associée, le premier contact étant du côté de la source et le deuxième contact étant du côté de la ligne,
- une réactance shunt de compensation pour compenser la puissance réactive capacitive de ladite ligne,

ledit instant de fermeture étant déterminé en cas de séparation des contacts de chaque couple de contacts en présence d'un défaut sur l'une des trois phases, ladite détermination dudit instant de fermeture étant réalisée en utilisant les étapes suivantes :

- mesure de la tension entre le contact côté ligne et la terre pour chacune des phases,
- mesure de la tension entre le contact côté source et la terre pour au moins une phase,
- détermination de la tension entre le contact côté source et la terre pour chacune des phases,
- calcul pour deux phases distinctes, dites première et deuxième phase, de la différence entre la tension entre le contact côté ligne et la terre pour ladite première phase et la tension entre le contact côté ligne et la terre pour ladite deuxième phase, le calcul étant effectué pour chaque couple de phases distinctes,
- calcul de la différence entre la tension entre le contact côté source et la terre pour ladite première phase et la tension entre le contact côté source et la terre pour ladite deuxième phase, le calcul étant effectué pour chaque couple de phases distinctes,
- détermination dudit instant de fermeture à partir desdites différences de tension,

caractérisé en ce que ladite détermination dudit instant de fermeture est réalisée en comparant lesdites différences de tension entre deux phases saines côté ligne et côté source.

Grâce à l'invention, l'algorithme de détermination de fermeture va utiliser des données d'entrée correspondant à la différence de signaux entre deux phases du côté de la source et du côté de la ligne. Le procédé selon l'invention permet ainsi notamment de calculer la différence de tension entre deux phases saines du côté ligne et du côté source. La phase en défaut influe sur le signal des deux phases saines et le fait de travailler sur la différence de signaux entre deux phases saines permet d'éliminer l'influence de la phase en défaut. On récupère ainsi un signal de forme beaucoup plus simple à analyser. Ceci permet d'utiliser des algorithmes de détermination de l'instant de fermeture avec un temps de convergence réduit pour un degré de confiance donné. Il est nécessaire de faire le calcul de la différence pour chaque couple de phases distinctes puisqu'on ignore à l'avance quelle est la phase en défaut.

Avantageusement, ladite détermination dudit instant de fermeture est réalisée par la détermination d'un instant où les deux signaux correspondant aux dites différences de tensions entre deux phases saines côté ligne et côté source sont sensiblement égaux et présentent une même monotonie sur un intervalle non nul autour dudit instant.

Avantageusement, ladite détermination de la tension entre le contact côté source et la terre pour chacune des phases est réalisée en effectuant un déphasage de 120° et de 240° de ladite tension mesurée entre le contact côté source et la terre pour au moins une phase.

Avantageusement, ladite mesure de la tension entre le contact côté ligne et la terre pour chacune des phases est réalisée à l'aide d'un transformateur de tension.

D'autres caractéristiques et avantages de la présente invention apparaîtront dans la description suivante d'un mode de réalisation de l'invention donné à titre illustratif et nullement limitatif.

Dans les figures suivantes :

- La figure 1 représente le schéma équivalent d'un réseau électrique très haute tension,
- La figure 2 représente shématiquement les trois phases d'une ligne très haute tension telle que représentée en figure 1, sur lesquelles est mis en oeuvre un procédé selon l'invention,
- La figure 3 représente deux signaux de tension obtenus par le procédé selon l'invention.

Dans toutes les figures, les éléments communs portent les mêmes numéros de référence.

La figure 1 a déjà été décrite en relation avec l'état de la technique.

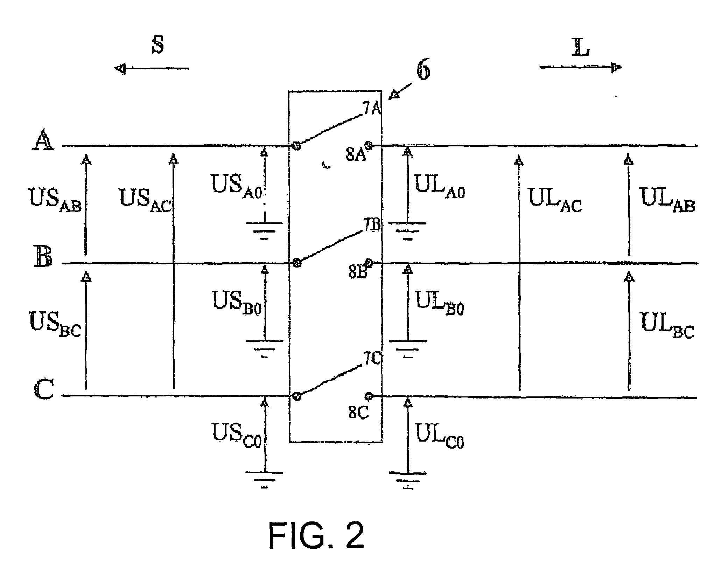

La figure 2 représente shématiquement les trois phases A, B et C d'une ligne haute tension telle que la ligne représentée en figure 1 sur lesquelles est mis en oeuvre un procédé selon l'invention.

Le disjoncteur 6 comporte trois couples de contacts (7A, 8A), (7B, 8B) et (7C, 8C), chaque couple étant associé à une des trois phases A, B ou C et permettant d'interrompre tout courant circulant entre la source S et la ligne L par séparation des deux contacts en cas de défaut sur la phase associée, le premier contact étant du côté de la source et le deuxième contact étant du côté de la ligne.

Faisons l'hypothèse que l'une des phases A, B ou C présente un défaut ; en conséquence, le disjoncteur 6 est ouvert pour les trois phases A, B et C, séparant ainsi le côté source S du côté ligne L ; on parle d'ouverture tripolaire du disjoncteur sur un défaut monophasé.

L'objectif du procédé selon l'invention est de fournir à un algorithme de détermination de l'instant de fermeture du disjoncteur 6 des signaux de données faciles à analyser. Cet algorithme doit déterminer un instant de fermeture pour lequel les tensions aux bornes des contacts du disjoncteur sont sensiblement nulles. L'algorithme utilisé peut être par exemple un algorithme utilisant une méthode de Prony, un algorithme de reconnaissance par neurones ou un algorithme d'analyse par ondelettes tel que décrit dans l'ouvrage « ondelettes et algorithmes concurrents » (Y. Meyer, Hermann, 1992).

Le procédé selon l'invention comporte une première étape de mesure des tensions $UL_{A0}$, $UL_{B0}$ et $UL_{C0}$ entre les contacts côté ligne des phases A, B et C et la terre. Ces trois mesures sont réalisées à l'aide de trois transformateurs capacitifs de tension non représentés et associés chacun à une phase.

En parallèle, le procédé comporte également une étape de mesure d'une tension, pour au moins une phase A, B ou C, entre le contact côté source de cette phase et la terre. Soit $US_{A0}$ cette tension entre le contact côté source de la phase A et la terre.

Les deux autres tensions $US_{B0}$ et $US_{C0}$ entre les contacts pour les phases B et C et la terre sont déduites de la tension $US_{A0}$ par un déphasage de 120° et 240° du signal $US_{A0}$.

Le procédé selon l'invention comporte alors une étape de calcul des six différences suivantes :

$$US_{A0} \ - \ US_{B0} \ = \ US_{AB}$$

$$US_{A0} \ - \ US_{C0} \ = \ US_{AC}$$

$$US_{B0} \ - \ US_{C0} \ = \ US_{BC}$$

$$UL_{A0} \ - \ UL_{B0} \ = \ UL_{AB}$$

$$UL_{A0} \ - \ UL_{C0} \ = \ UL_{AC}$$

$$UL_{B0} \ - \ UL_{C0} \ = \ UL_{BC}$$

Ces six différences sont d'une part les trois différences de tensions entre deux phases différentes du côté source et d'autre part les trois différences de tensions entre deux phases différentes du côté ligne.

Supposons que le défaut initial concerne la phase A.

La phase A en défaut influe sur les deux phases saines B et C. Les différences $US_{B0}$ - $US_{C0}$ = $US_{BC}$ et $UL_{B0}$ - $UL_{C0}$ = $UL_{BC}$ permettent de supprimer l'effet de la phase A sur les phases B et C, la phase A agissant de manière sensiblement identique sur les deux autres phases saines B et C. De cette manière, on obtient deux signaux de forme beaucoup plus simple à analyser que des signaux obtenus directement par les différences $US_{B0}$ - $UL_{B0}$ et $US_{C0}$ - $UL_{C0}$ ; de telles différences restent en effet perturbées par la phase en défaut et fournissent des signaux très difficiles à analyser par la suite.

Notons qu'il est nécessaire de calculer les six différences et non seulement les différences liées aux deux phases saines puisque l'on ignore à l'avance quelle est la phase en défaut.

Les six différences correspondant aux signaux $US_{AB}$, $US_{AC}$, $US_{BC}$, $UL_{AB}$, $UL_{AC}$ et $UL_{BC}$ sont ensuite fournies en tant que données d'entrée de l'algorithme de détermination qui déterminera l'instant de la commande de fermeture du disjoncteur 6.

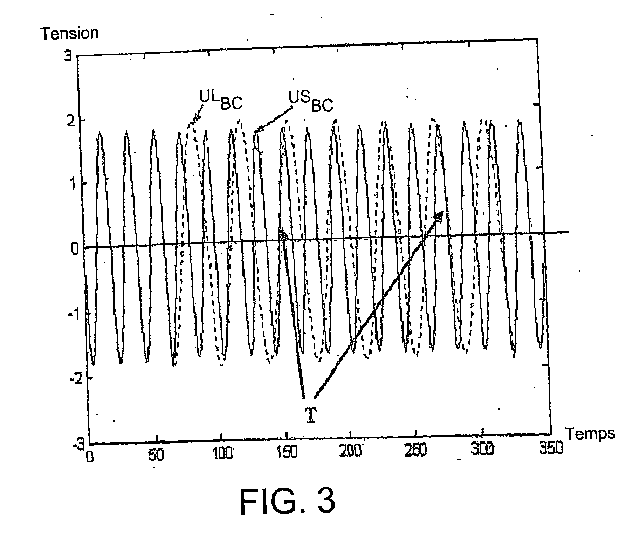

La figure 3 représente ainsi un exemple de différences de tensions $US_{BC}$ (=$US_{B0}$ - $US_{C0}$) et $UL_{BC}$ (= $UL_{B0}$ - $UL_{C0}$) en fonction du temps en cas de défaut sur la phase A. Les signaux $US_{BC}$ et $UL_{BC}$ sont des signaux quasi sinusoïdaux très peu perturbés et donc relativement simples à analyser pour l'algorithme de détermination.

Une façon pour déterminer l'instant T de fermeture consiste par exemple à se placer à un instant où les deux signaux $US_{BC}$ et $UL_{BC}$ sont sensiblement égaux et présentent une même monotonie sur un intervalle non nul autour de T. Les deux flèches représentées sur la figure 3 donnent ainsi deux exemples de choix de l'instant T (dans le premier cas, les deux signaux $US_{BC}$ et $UL_{BC}$ sont croissants autour de T et dans le deuxième cas, les deux signaux $US_{BC}$ et $UL_{BC}$ sont décroissants autour de T).

Bien entendu, l'invention n'est pas limitée au mode de réalisation qui vient d'être décrit.

Notamment, la mesure, pour chacune des phases, de la tension entre le contact côté ligne et la terre a été décrite comme étant réalisée à l'aide d'un transformateur capacitif de tension mais elle peut également être réalisée par un transformateur inductif de tension.

## Revendications

1.  Procédé de détermination de l'instant de fermeture d'un disjoncteur (6) sur un réseau électrique, ledit réseau comportant :

    - une source haute tension (S),
    - une ligne de transport triphasée (L),
    - un disjoncteur (6) comportant au moins trois couples de contacts (7A, 8A, 7B, 8B, 7C, 8C), chaque couple étant associé à une des trois phases (A, B, C) de ladite ligne (L) et permettant d'interrompre tout courant circulant entre ladite source (S) et ladite ligne (L) par séparation desdits deux contacts en cas de défaut sur la phase associée, le premier contact étant du côté de la source et le deuxième contact étant du côté de la ligne,
    - une réactance shunt (5) de compensation pour compenser la puissance réactive capacitive de ladite ligne (L),

    ledit instant de fermeture étant déterminé en cas de séparation des contacts de chaque couple de contacts, ladite détermination dudit instant de fermeture étant réalisée en utilisant les étapes suivantes :

    - mesure de la tension ($UL_{A0}$, $UL_{B0}$, $UL_{C0}$) entre le contact côté ligne et la terre pour chacune des phases,
    - mesure de la tension ($US_{A0}$) entre le contact côté source et la terre pour au moins une phase,
    - détermination de la tension ($US_{A0}$, $US_{B0}$, $US_{C0}$) entre le contact côté source et la terre pour chacune des phases,
    - calcul pour deux phases distinctes, dites première et deuxième phases, de la différence ($UL_{AB}$, $UL_{AC}$, $UL_{BC}$) entre la tension entre le contact côté ligne et la terre pour ladite première phase et la tension entre le contact côté ligne et la terre pour ladite deuxième phase, le calcul étant effectué pour chaque couple de phases distinctes,
    - calcul de la différence ($US_{AB}$, $US_{AC}$, $US_{BC}$) entre la tension entre le contact côté source et la terre pour ladite première phase et la tension entre le contact côté source et la terre pour ladite deuxième phase, le calcul étant effectué pour chaque couple de phases distinctes,
    - détermination dudit instant de fermeture à partir desdites différences de tensions,

    **caractérisé en ce que** ladite détermination dudit instant de fermeture (T) est réalisée en présence d'un défaut sur l'une des trois phases, en comparant lesdites différences de tensions ($US_{BC}$, $UL_{BC}$) entre deux phases saines côté ligne et côté source.

2.  Procédé de détermination de l'instant de fermeture d'un disjoncteur sur un réseau électrique selon la revendication précédente **caractérisé en ce que** ladite détermination dudit instant de fermeture (T) est réalisée par la détermination d'un instant où les deux signaux correspondant aux dites différences de tensions ($US_{BC}$, $UL_{BC}$) entre deux phases saines côté ligne et côté source sont sensiblement égaux et présentent une même monotonie sur un intervalle non nul autour dudit instant.

3.  Procédé de détermination de l'instant de fermeture d'un disjoncteur sur un réseau électrique selon l'une des revendications précédentes, **caractérisé en ce que** ladite détermination de la tension ($US_{A0}$, $US_{B0}$, $US_{C0}$) entre le contact côté source et la terre pour chacune des phases est réalisée en effectuant un déphasage de 120° et de 240° de ladite tension ($US_{A0}$) mesurée entre le contact côté source et la terre pour au moins une phase.

4.  Procédé de détermination de l'instant de fermeture d'un disjoncteur sur un réseau électrique selon l'une des revendications précédentes, **caractérisé en ce que** ladite mesure de la tension entre le contact côté ligne et la terre pour chacune des phases est réalisé à l'aide d'un transformateur de tension (4).

## Claims

1.  Method for determining the reclose time of a circuit breaker (6) on an electric network, said network comprising:

    - a high voltage source (S),
    - a three-phase transmission line (L),
    - a circuit breaker (6) comprising at least three pairs of contacts (7A,8A; 7B,8B; 7C,8C), each pair being associated with one of the three phases (A, B C) of said line (L) and enabling the interruption of any current circulating between said source (S) and said line (L) by separating said two contacts in the event of a fault on the associated phase, the first contact being on the source side and the second contact being on the line side,
    - a shunt compensation reactor (5) to compensate capacitive reactive power of said line (L),

    said reclose time being determined in the event of separation of the contacts of each pair of contacts, said determination of said reclose time being made using the following steps:

- measuring the voltage ($UL_{A0}$, $UL_{B0}$, $UL_{C0}$) between the line side contact and earth for each of the phases,
- measuring the voltage ($US_{A0}$) between the source side contact and earth for at least one phase,
- determining the voltage ($US_{A0}$, $US_{B0}$, $US_{C0}$) between the source side contact and earth for each of the phases,
- calculating, for two separate phases called first and second phases, the voltage difference ($UL_{AB}$, $UL_{AC}$, $UL_{BC}$) between the line side contact and earth for said first phase, and the voltage difference between the line side contact and earth for said second phase, the calculation being made for each pair of separate phases,
- calculating the voltage difference ($US_{AB}$, $US_{AC}$, $US_{BC}$) between the source side contact and earth for said first phase, and the voltage difference between the source side contact and earth for said second phase, the calculation being made for each pair of separate phases,
- determining said reclose time on the basis of said voltage differences, **characterized in that**

said determination of said reclose time (T) is made in presence of a fault on one of the three phases by comparing said voltage differences ($US_{BC}$, $UL_{BC}$) between two healthy phases on the line side and source side.

**2.** Method for determining the reclose time of a circuit breaker on an electric network as in the preceding claim, **characterized in that** said determination of said reclose time (T) is made by determining the time at which the two signals corresponding to said voltage differences ($US_{BC}$, $UL_{BC}$) between two healthy phases on the line side and source side are substantially equal and show the same monotony over a non-zero interval about said time.

**3.** Method for determining the reclose time of a circuit breaker on an electric network as in any of the preceding claims, **characterized in that** said determination of the voltage ($US_{A0}$, $US_{B0}$, $US_{C0}$) between the source side contact and earth for each of the phases is made by 120° and 240° phase shifting of said voltage ($US_{A0}$) measured between the source side contact and earth for at least one phase.

**4.** Method for determining the reclose time of a circuit breaker on an electric network as in any of the preceding claims, **characterized in that** said measurement of the voltage between the line side contact and earth for each phase is made using a voltage transformer (4).

**Patentansprüche**

**1.** Verfahren zum Bestimmen des Schließzeitpunkts eines Unterbrecherschalters (6) an einem Stromnetz, wobei das Netz umfasst:

- eine Hochspannungsquelle (S),
- eine dreiphasige Übertragungsleitung (L),
- einen Schalter (6) mit zumindest drei Kontaktpaaren (7A, 8A, 7B, 8B, 7C, 8C), wobei jedes Paar einer der drei Phasen (A, B, C) der Leitung (L) zugeordnet ist und ermöglicht, jeglichen zwischen der Quelle (S) und der Leitung (L) fließenden Strom durch Trennung der beiden Kontakte bei einem Fehler an der zugeordneten Phase zu unterbrechen, wobei der erste Kontakt sich seitens Quelle und der zweite Kontakt sich seitens Leitung befindet,
- einen Kompensationsblindwiderstand (5) zum Kompensieren der kapazitiven Blindleistung der Leitung (L),

wobei der Schließzeitpunkt bei Trennung der Kontakte eines jeden Kontaktpaares bestimmt wird, wobei die Bestimmung des Schließzeitpunkts unter Ausführung der nachfolgenden Schritte erfolgt:

- Messen der Spannung ($UL_{A0}$, $UL_{B0}$, $UL_{C0}$) zwischen dem leitungsseitigen Kontakt und der Erde für jede der Phasen,
- Messen der Spannung ($US_{A0}$) zwischen dem quellenseitigen Kontakt und der Erde für zumindest eine Phase,
- Bestimmen der Spannung ($US_{A0}$, $US_{B0}$, $US_{C0}$) zwischen dem quellenseitigen Kontakt und der Erde für jede der Phasen,
- bei zwei unterschiedlichen Phasen, der sogenannten ersten und zweiten Phase, Berechnen der Differenz ($UL_{AB}$, $UL_{AC}$, $UL_{BC}$) zwischen der Spannung zwischen dem leitungsseitigen Kontakt und der Erde für die erste Phase und der Spannung zwischen dem leitungsseitigen Kontakt und der Erde für die zweite Phase, wobei die Berechnung für jedes Paar von unterschiedlichen Phasen erfolgt,
- Berechnen der Differenz ($US_{AB}$, $US_{AC}$, $US_{BC}$) zwischen der Spannung zwischen dem quellenseitigen Kontakt und der Erde für die erste Phase und der Spannung zwischen dem quellenseitigen Kontakt und der Erde für die zweite Phase, wobei die Berechnung für jedes Paar von unterschiedlichen Phasen erfolgt,
- Bestimmen des Schließzeitpunkts ausgehend von den Spannungsdifferenzen,

**dadurch gekennzeichnet, dass** die Bestimmung des Schließzeitpunkts (T) bei einem vorhandenen Fehler an einer der drei Phasen erfolgt, indem die Spannungsdifferenzen ($US_{BC}$, $UL_{BC}$) zwischen zwei intakten Phasen seitens Leitung und seitens Quelle verglichen werden.

2.  Verfahren zum Bestimmen des Schließzeitpunkts eines Unterbrecherschalters an einem Stromnetz nach dem vorangehenden Anspruch, **dadurch gekennzeichnet, dass** die Bestimmung des Schließzeitpunkts (T) durch Bestimmen eines Zeitpunktes erfolgt, an dem die beiden Signale, die den Spannungsdifferenzen ($US_{BC}$, $UL_{BC}$) zwischen zwei intakten Phasen seitens Leitung und seitens Quelle entsprechen, im wesentlichen gleich sind und bei einem Intervall ungleich null um den genannten Zeitpunkt eine gleiche Monotonie aufweisen.

3.  Verfahren zum Bestimmen des Schließzeitpunkts eines Schalters an einem Stromnetz nach einem der vorangehenden Ansprüche, **dadurch gekennzeichnet, dass** die Bestimmung der Spannung ($US_{A0}$, $US_{B0}$, $US_{C0}$) zwischen dem quellenseitigen Kontakt und der Erde für jede der Phasen erfolgt, indem eine Phasenverschiebung der zwischen den quellenseitigen Kontakt und der Erde für zumindest eine Phase gemessenen Spannung ($US_{A0}$) um 120° und um 240° erfolgt.

4.  Verfahren zum Bestimmen des Schließzeitpunkts eines Unterbrecherschalters an einem Stromnetz nach einem der vorangehenden Ansprüche, **dadurch gekennzeichnet, dass** die Messung der Spannung zwischen dem leitungsseitigen Kontakt und der Erde für jede der Phasen mit Hilfe eines Spannungswandlers (4) erfolgt.

6　7　　　　　　L

8

S　　　4　　　　　1　　　　　5

FIG. 1

8

FIG. 2

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6392390 B

**Littérature non-brevet citée dans la description**

- **Y. MEYER.** *ondelettes et algorithmes concurrents,* 1992